# EUROPEAN PATENT APPLICATION

(11) **EP 2 130 477 A2**
(43) Date of publication of application: **09.12.2009**
(21) Application number: 09161909.8
(22) Date of filing: 04.06.2009
(51) Int. Cl.: A47L 15/44

(54) **A device for dispensing a washing agent in a washing machine, in particular a dishwasher**

(30) Priority: 06.06.2008 IT TO20080438
(71) Applicant: ELBI International S.p.A., 10129 Torino (IT)
(72) Inventor: Marone, Giuseppe, 10042 Nichelino (Torino) (IT)
(74) Representative: Quinterno, Giuseppe

(57) **Abstract**

The device (19) comprises a support body (2) in which a cup-shaped receptacle is defined (3), which is intended to receive an amount of a washing agent (WA), and to which a movable closure lid (4) is associated. Optical detecting devices (7, 8; 9, 10) for the presence of the washing agent (WA) are associated to the receptacle (3).

The cup-shaped receptacle (3) is made at least partially of an at least partially transparent material, and the operatively lower portion thereof (3a) forms a recess or well (6) operatively extending downwards, and it is at least partially made of an at least partially transparent material.

The sensor devices comprise a first emitter (7) and an associated first receiver (8) which are arranged at opposite sides relative to the receptacle (3), and mutually facing according to a direction which intersects at least partially transparent portions of the receptacle (3), at a preset distance from the mouth of said recess or well (6); and
a second emitter (9) and an associated second receiver (10), which are arranged at opposite sides relative to the recess or well (6), and mutually facing according to a direction which intersects at least partially transparent portions of such recess or well (6).

## Description

The present invention relates to a device for dispensing a washing agent in a washing machine, particularly a dish-washing machine.

More specifically, the invention relates to a device comprising a support body, in which a cup-shaped receptacle is defined, intended to receive an amount of said washing agent, and to which a closure movable lid is associated; optical detecting means for detecting the presence of the washing agent being associated to the receptacle.

The object of the present invention is to implement such dispensing device, which has improved characteristics.

This and other objects are achieved according to the invention by a device of the above-specified type, **characterized in that**
the cup-shaped receptacle is made at least partially of an at least partially transparent material, and the operatively lower part thereof forms a recess or well extending relatively downwards, and it is at least partially made of an at least partially transparent material;
the detecting means comprising
a first emitter and an associated first receiver, which are arranged at opposite sides relative to the receptacle, and mutually facing according to a direction which intersects at least partially transparent portions of the receptacle, at a preset distance from the mouth of said recess or well; and
a second emitter and an associated second receiver, which are arranged at opposite sides relative to said recess or well, and mutually facing according to a direction which intersects at least partially transparent portions of said recess or well.

Further characteristics and advantages of the invention will result from the following detailed description, given by way of non-limiting example only, with reference to the annexed drawings, in which:
Fig. 1 is a partially sectional partial view of a dispensing device according to the present invention in an operative condition;
Fig. 2 is a view similar to that illustrated in Fig. 1, and it shows the dispensing device in another operative condition; and
Fig. 3 is a view similar to those illustrated in the preceding Figures, and it shows the dispensing device in a further operative condition.

In the drawings, a device according to the invention for dispensing a washing agent in a washing machine, particularly a dish-washing machine, is generally indicated 1.

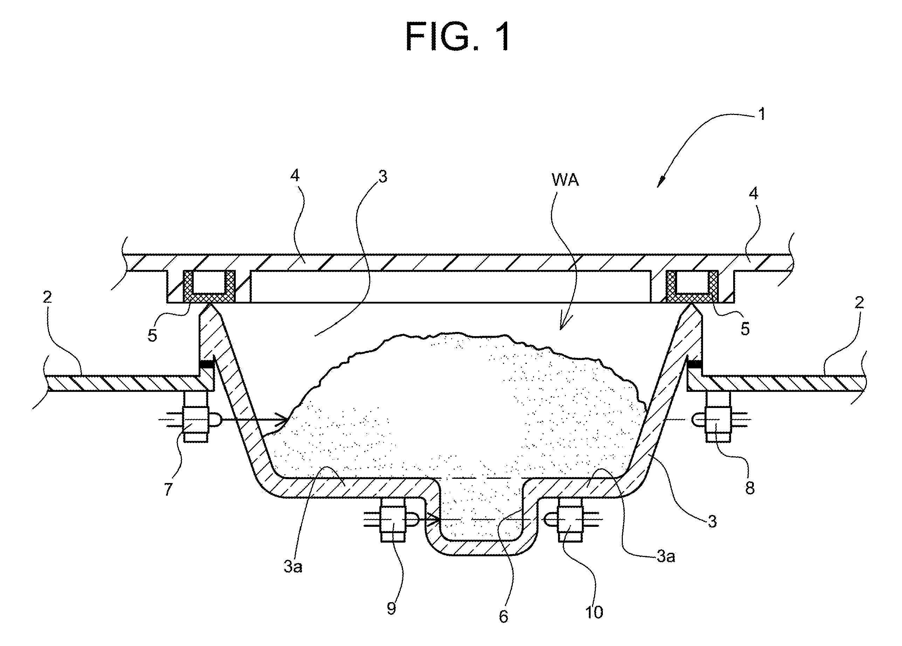

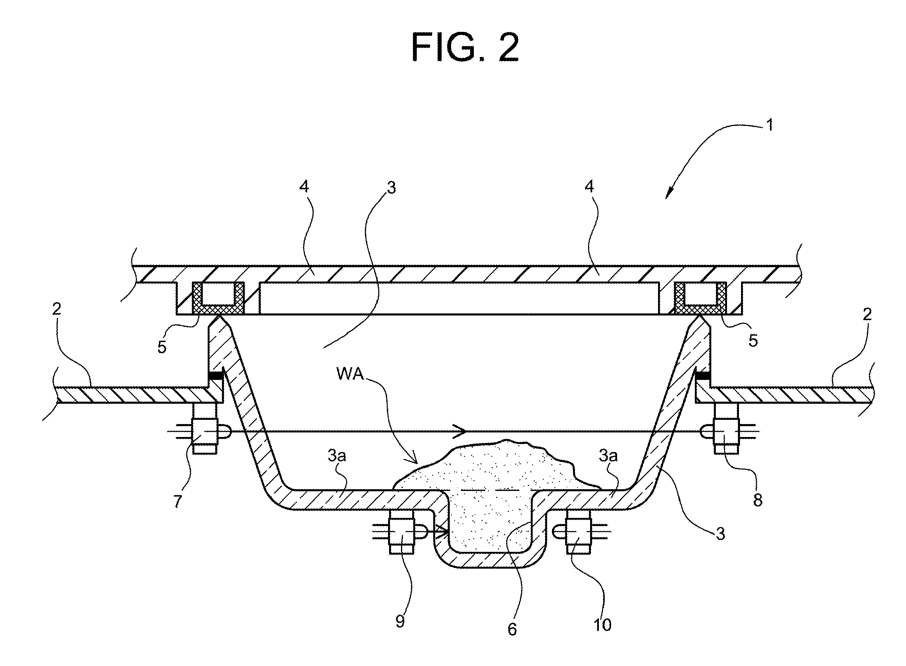

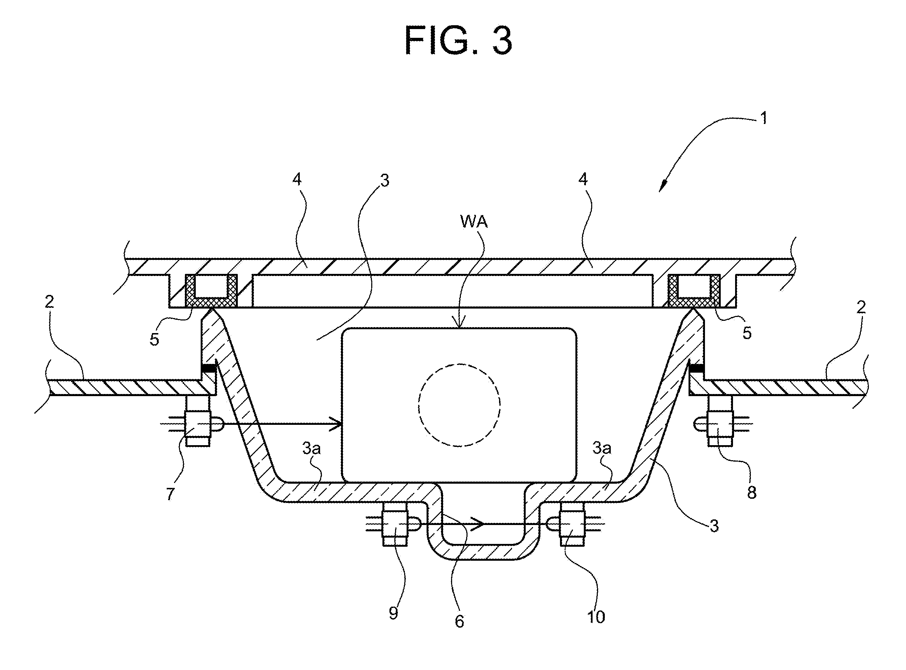

Such device comprises a support body 2, in which a cup-shaped receptacle is defined 3, which is intended to receive an amount of a washing agent WA that may be powdered, as it is shown in Figs. 1 and 2, or in the form of a block or tablet, as it is shown in Fig. 3.

A movable closure lid 4 is associated to the cup-shaped receptacle 3. In the illustrated exemplary embodiment, the lid 4 has a sealing gasket 5 which, in the closure condition of such lid engages the edge of the mouth of the cup-shaped receptacle 3.

In the dispensing device 1 according to the invention, the cup-shaped body 3 is made at least partially of an at least partially transparent material, such as a plastic material. Preferably, as it is shown in the drawings, the cup-shaped receptacle 3 is entirely made of an at least partially transparent material, and it is welded or otherwise interconnected to the support body or structure 2 of the dispensing device, which generally is made of an opaque material.

The relatively lower wall 3a of the receptacle 3 forms a recess or cavity, in the shape of a well, indicated 6, operatively extending downwards.

If the dispensing device 1 is used with a metered washing agent block or tablet (generally incorporating also a dose of a rinsing agent), the recess or well 6 mouth has smaller dimensions than those of such a block or tablet, as it can be seen in Fig. 3.

Also the recess or well 6 is made at least partially of an at least partially transparent material, and preferably entirely of such a material.

The dispensing device 1 comprises a first emitter-receiver pair, associated to the receptacle 3. Such a first pair comprises an emitter, indicated 7, such as, for example, an emitting diode, and an associated receiver 8, such as a phototransistor. Said devices are mounted at opposite sides relative to the receptacle 3, at a preset distance above the mouth of the recess or well 6, and are operatively mutually facing according to a preferably horizontal direction which intersects at least partially transparent portions of the walls of such receptacle.

A second emitter-receiver pair is associated to the dispensing device 1, comprising an emitter 9, such as an emitting diode, and an associated receiver 10, such as a phototransistor. Such devices are located at opposite sides relative to the recess or well 6, and are operatively mutually facing according to a preferably horizontal direction, which intersects at least partially transparent portions of the walls of such recess or well.

The emitter 7 and the associated receiver 8 are operatively facing according to such a direction whereby the beam emitted by the first towards the second is susceptible of being positively intercepted by a possible washing agent WA block or tablet which is held in the cup-shaped receptacle 3, as it can be seen in Fig. 3.

In the operation, if an amount of powdered washing agent WA is present in the cup-shaped receptacle 3, as shown in Fig. 1, both the beam irradiated by the emitter 7, and that irradiated by the emitter 9 are intercepted by the washing agent, and therefore they are not received by the associated receivers 8 and 10.

If the amount of powdered washing agent WA held in the cup-shaped receptacle 3 is below a predetermined level, as it is shown in Fig. 2, the beam irradiated by the emitter 7 is received by the receiver 8, while the beam irradiated by the emitter 9 is not received by the receiver 10.

Therefore, a control unit of the washing machine, connected to the receivers 8 and 10, is capable of inferring if the level of the powdered agent in the cup-shaped receptacle 3 is above or below the threshold.

The signals provided by the receivers 8 and 10 can also be used to detect the presence or the absence of a washing agent block or tablet WA (Fig. 3). In fact, in the presence of such a block or tablet, the receiver 8 does not receive any beam, since the beam irradiated by the associated emitter 7 is intercepted by the washing agent block. At the same time, on the other hand, the receiver 10 is capable of receiving the beam emitted by the emitter 9.

In the absence of a washing agent block or tablet in the cup-shaped receptacle 3, both receivers 8 and 10 receive the beams emitted by the associated emitters 7 and 9.

It shall be apparent that, the principle of the invention remaining unchanged, the embodiments and the implementation details can be widely varied with respect to what has been described and illustrated by way of non-limiting example only, without thereby departing from the scope of the invention as defined in the annexed claims.

## Claims

1. A device (19) for dispensing a washing agent (WA) in a washing machine, particularly a dish-washing machine, comprising a support body (2) in which a cup-shaped receptacle is defined (3), which is intended to receive an amount of said washing agent (WA), and to which a movable closure lid (4) is associated; optical detecting means (7, 8; 9, 10) for detecting the presence of the washing agent (WA) being associated to said receptacle (3);
the device (1) being **characterized in that**
the cup-shaped receptacle (3) is made at least partially of an at least partially transparent material, and the operatively lower portion thereof (3a) forms a recess or well (6) operatively extending downwards, and it is at least partially made of an at least partially transparent material;
said detecting means comprising a first emitter (7) and an associated first receiver (8) which are arranged at opposite sides relative to the receptacle (3), and mutually facing according to a direction which intersects at least partially transparent portions of the receptacle (3), at a preset distance from the mouth of said recess or well (6); and
a second emitter (9) and an associated second receiver (10), which are arranged at opposite sides relative to said recess or well (6), and mutually facing according to a direction which intersects at least partially transparent portions of said recess or well (6).

2. The dispensing device according to claim 1, wherein said first and second emitters (7; 9) face the first and the second receivers (8; 10), respectively, according to respective directions which, in the operation, are substantially horizontal.

3. The dispensing device according to claim 1 or 2, intended for the use with a pre-metered washing agent block or tablet (WA), the mouth of said recess or well (6) having smaller dimensions that those of said block or tablet (WA); the first emitter (7) and the associated first receiver (8) being arranged so that a washing agent block or tablet (WA) which is held in the cup-shaped receptacle (3) intersects the beam emitted by the first emitter (7) to the first receiver (8).

4. The device for dispensing a washing agent in a washing machine, particularly a dish-washing machine, substantially according to what has been described and illustrated, and for the specified objects.
